# EUROPÄISCHE PATENTSCHRIFT

(11) **EP 0 707 168 B1**
(45) Veröffentlichungstag und Bekanntmachung des Hinweises auf die Patenterteilung: **16.12.1998**
(21) Anmeldenummer: 95115928.4
(22) Anmeldetag: 10.10.1995
(51) Int. Cl.: F16L 5/04, A62C 2/06

(54) **Rohrmanschette zum Abschotten von durch Wände oder Decken hindurchführenden Rohren**
Device for the partition of pipes passing through walls or ceilings
Dispositif pour le cloisonnement de tuyaux traversant des parois ou des plafonds

(30) Priorität: 13.10.1994 DE 9416491 U
(43) Veröffentlichungstag der Anmeldung: 17.04.1996
(73) Patentinhaber: Friatec Aktiengesellschaft, 68229 Mannheim (DE)
(72) Erfinder: Züll, Armin, D-74177 Bad Friedrichshall (DE)
(74) Vertreter: Schmitt, Meinrad, Dipl.-Ing.

(56) Entgegenhaltungen:
- DE-A- 4 321 307
- FR-A- 1 184 877
- FR-A- 1 330 293
- FR-A- 2 348 329
- US-A- 1 613 725

## Beschreibung

### TECHNISCHES GEBIET

Die Erfindung betrifft eine Rohrmanschette zum Abschotten von durch Wände oder Decken hindurchführenden Rohren. Diese Wände oder Decken stellen brandabschnittsbegrenzende Bauteile dar.

Aufgrund baurechtlicher Bestimmungen müssen größere Gebäude in Brandabschnitte unterteilt werden. Dabei besteht das Problem, daß elektrische Kabel und Leitungen durch diese Brandabschnitte hindurchgeführt werden müssen, so daß die einzelnen Brandabschnitte innerhalb eines Gebäudes über diese Leitungen oder Rohre miteinander verbunden sind. Öffnungen in den die Brandabschnitte begrenzenden Wänden und Decken sind aus Gründen des Brandschutzes aber unzulässig. Daher dürfen Leitungen, Rohre und dergleichen durch diese Wände und Decken nur hindurchgeführt werden, wenn gegen eine Brandübertragung durch diese Rohre hindurch besondere Vorkehrungen getroffen worden sind.

### STAND DER TECHNIK

Aus der DE-OS 43 21 307 ist eine Rohrmanschette bekannt, die aus mehreren Hülsenteilen besteht. Auf der Innenseite dieser Rohrmanschette bzw. ihrer Hülsenteile ist ein unter Hitzeeinwirkung sich nach innen ausdehnendes, feuerfestes Blähmaterial vorhanden. Die Segmente besitzen nach außen abgewinkelte Längsstege. Durch Verschrauben der aufeinander liegenden Stegteile von umfangsmäßig benachbarten Segmenten wird die im Querschnitt kreisförmige Form der Rohrmanschette hergestellt. Das Verbinder der jeweiligen Stegteile erfolgt über eine von außen zugängliche Verschraubung. Der untere Endbereich der Stegteile ist mit einer nach innen einspringenden Schulter versehen. Auf dieser Schulter findet das innen vorhandene Blähmaterial eine Abstützung. Das Blähmaterial ist im wesentlichen nur in dem Bereich der Rohrmanschette vorhanden, der aus dem Wand- oder Deckenbereich herausragt; das Blähmaterial soll unter Hitzeeinwirkung sich nämlich nach innen ausdehnen und dadurch das Rohr im Bereich der Wand- bzw. Deckenaußenseite verschließen. Bei Durchbrüchen von Wänden ist eine derartige Rohrmanschette auf beiden Seiten der Wand im Bereich eines Durchbruches vorhanden, um einen Rauch- und Feuerdurchtritt von einer Wandseite auf die andere Wandseite zu verhindern. Bei Deckendurchbrüchen kann ein Feuerübertritt nur von unten nach oben durch den Deckendurchbruch hindurch erfolgen, so daß eine Rohrmanschette nur auf der Unterseite der Decke sinnvollerweise vorhanden sein muß. Diese bekannte Rohrmanschette braucht zum Zusammenschrauben einen relativ großen Freiraum um sich herum.

### DARSTELLUNG DER ERFINDUNG

Ausgehend von diesem vorbekannten Stand der Technik liegt der Erfindung die Aufgabe zugrunde, eine verbesserte Rohrmanschette der eingangs genannten Art anzugeben.

Diese Erfindung ist durch die Merkmale des Hauptanspruchs gegeben. Ausgehend von einer Rohrmanschette der eingangs genannten Art, die aus mehreren Segmenten zusammensetzbar ist, wobei die Segmente jeweils abgewinkelte Längsstege besitzen, zeichnet sich die Erfindung dadurch aus, daß die Längsstege dieser Segmente nach innen so abgewinkelt sind, daß in zusammengesetztem Zustand der Segmente diese Längsstege aneinanderliegen. Der von der Rohrmanschette benötigte lichte Querschnitt des Wand- oder Deckendurchbruches entspricht damit einem Kreis. Dadurch wird es möglich, extrem kleine Durchbrüche vorzusehen. Das nachträgliche Ausbetonieren der Bereiche um das Rohr herum kann weitestgehend entfallen.

Die Rohrmanschette wird vorzugsweise mit ihrem einen Endbereich teilweise in den Wand- oder Deckendurchbruch hineingesteckt. Sofern beispielsweise der Durchbruch kreisförmig ist, beziehungsweise die Manschette mehr oder weniger unverzüglich einbetoniert wird, könnte auf eine außerhalb des Durchbruches vorzusehende Befestigung der beiden Segmente aneinander verzichtet werden. Ansonsten können die aus dem Durchbruch herausschauenden Endbereiche der Segmente durch ein um sie herum geführtes Spannband aneinander befestigt werden.

Um sicherzustellen, daß im Brandfall das Blähmaterial sich nach innen gegen die abzuquetschende Rohrwandung richtet, ist auf der unteren Stirnseite der Segmente eine nach innen weisende Umbiegung vorhanden. Diese Umbiegung dient nicht nur zur einfachen Montage des Blähmaterials im Inneren der Rohrmanschette, sondern gibt auch eine gewisse Abstützung für das sich nach innen hin ausdehnende Blähmaterial.

Um den Halt der Rohrmanschette im Inneren des Durchbruches zu verbessern, besitzen die Segmente in ihrem oberen Bereich eine rauhe Außenfläche. Diese Rauhigkeit kann beispielsweise durch eine aufgebrachte Kunststoffschicht hergestellt werden.

Weitere Merkmale und Vorteile der Erfindung sind den in den Ansprüchen ferner angegebenen Merkmalen sowie dem nachfolgenden Ausführungsbeispiel zu entnehmen.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig. 1: eine in einem Deckendurchbruch montierte Rohrmanschette nach der Erfindung,
- Fig. 2: die um ein Rohr herum zu legenden einzelnen Bestandteile der erfindungsgemäßen Rohrmanschette.

### WEGE ZUR AUSFÜHRUNG DER ERFINDUNG

In einer Massivdecke 10 ist ein Deckendurchbruch 12 vorhanden. Durch diesen Durchbruch führt ein Rohr 14 hindurch, das beispielsweise ein im Sanitärbereich verlegtes Kunststoffrohr ist.

Das Rohr 14 wird von einer Rohrmanschette 16 umgeben. Diese Rohrmanschette 16 besteht aus zwei halbschaligen Segmenten 18, 20, die beide identisch ausgebildet sind. Jedes Segment 18, 20 besitzt einen im Querschnitt halbkreisförmigen Mantel 22, dessen beiden Längsseiten um etwa 90 Grad nach innen umgebogen sind, so daß ein nach innen rechtwinklig wegstehender Steg 24, 26 an jedem Segment 18, 20 ausgebildet ist.

Auf der Unterseite des Mantels 22 besitzt derselbe eine ebenfalls um etwa 90 Grad nach innen umgebogene Umbiegung 28.

Auf der Innenseite des Mantels 22 ist ein Blähmaterial 30 vorhanden, das unten auf der Umbiegung 28 aufsitzt. Das Blähmaterial 30 erstreckt sich nicht über die gesamte Längsausdehnung L der beiden Segmente 18, 20, da in dem oberen Bereich 32 der Manschette 16, der im Durchbruch 12 im eingebauten Zustand vorhanden ist, kein Blähmaterial vorhanden zu sein braucht. Das Blähmaterial ist daher nur im unteren Bereich 34 der Segmente 18, 20 vorhanden. Dieser untere Bereich erstreckt sich von der Umbiegung 28 aus lediglich teilweise in den Durchbruch 12 hinein.

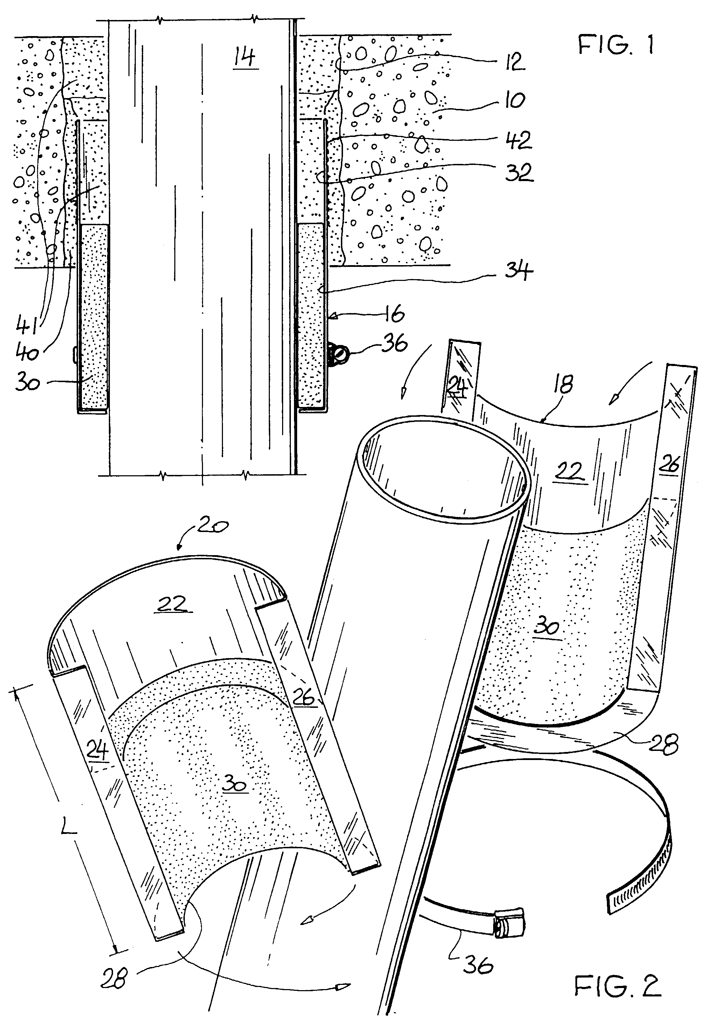

Außen um die Rohrmanschette 16 ist ein Spannband 36 herumgeführt, das durch Festspannen die beiden Segmente 18, 20 fest aneinander hält. Das Spannband 36 ist dadurch gut zugänglich. Eine Befestigung der beiden Segmente 18, 20 innerhalb des Durchbruches 12 ist in den meisten Fällen nicht erforderlich. Bei der in Fig. 1 dargestellten Situation hält das Spannband 36 auch den oberen Bereich der Segmente 18, 20 zusammen. Die beiden Segmente 18, 20 sind dadurch gegenseitig unverrückbar fest aneinander zu befestigen, da sie mit ihren Stegen 24, 26 flächig aneinanderliegen.

Die Bereiche zwischen den Segmenten 18, 20 und der Decke 10 sowie oberhalb des Blähmaterials 30 sind im vorliegenden Fall mit Vergußmörtel 40 bzw. 41 ausgefüllt. Dadurch daß der obere Bereich 32 der Segmente 18, 20 eine rauhe Außenfläche 42 aufweist, ist ein guter Haftungsverbund zwischen dem Vergußmaterial 40 und den Segmenten 18, 20 gegeben.

Nachdem es sich im vorliegenden Ausführungsbeispiel um einen Deckendurchbruch handelt, ist die Rohrmanschette nur im unteren Bereich der Decke angebracht. Sofern es sich um einen Wanddurchbruch handelt, der mit einer Rohrabschottung versehen werden soll, müssen im Regelfall auf beiden Wandseiten und damit auf beiden Seiten des entsprechenden Durchbruchs Abschottungsmaßnahmen vorgesehen werden. Diese Maßnahmen können auf beiden Wandseiten mit der erfindungsgemäßen Rohrmanschette 16 verwirklicht werden.

## Patentansprüche

1. Rohrmanschette (16) zum Abschotten von durch Wände oder Decken (10) hindurchführenden Rohren (14), mit
- einer aus mehreren Segmenten (18, 20) zusammensetzbaren Manschette, wobei die Segmente (18, 20) jeweils abgewinkelte Längsstege (24, 26) besitzen,
- einem unter Hitzeeinwirkung nach innen ausdehnbaren, feuerfesten Blähmaterial (30), das auf der Innenseite der mehrteiligen Manschette vorhanden ist,
**dadurch gekennzeichnet,** daß
- die Längsstege (24, 26) nach innen so abgewinkelt sind, daß im zusammengesetzten Zustand der Segmente (18, 20) diese Längsstege (24, 26) aneinanderliegen.

2. Rohrmanschette nach Anspruch 1,
**dadurch gekennzeichnet,** daß
- die zusammengesetzten Segmente (18, 20) durch zumindest ein Spannband (36) aneinander befestigbar sind.

3. Rohrmanschette nach Anspruch 1 oder 2,
**dadurch gekennzeichnet,** daß
auf der unteren Stirnseite der Segmente eine nach innen weisende Umbiegung (28) vorhanden ist.

4. Rohrmanschette nach einem der vorstehenden Ansprüche,
**dadurch gekennzeichnet,** daß
- die Segmente (18, 20) in ihrem oberen Bereich (32) eine rauhe Außenfläche (42) besitzen.

5. Rohrmanschette nach einem der vorstehenden Ansprüche,
**dadurch gekennzeichnet,** daß
- das Blähmaterial (30) nur in einem Endbereich (34) der Segmente (18, 20) vorhanden ist.

## Claims

1. Pipe sleeve (16) for partitioning off pipes (14) passing through walls or ceilings (10), comprising a sleeve which can be assembled from a plurality of segments (18, 20), the segments (18, 20) each having angled longitudinal webs (24, 26), and a refractory expanding material (30) expandable towards the inside when exposed to heat provided on the inner face of the multi-part sleeve, characterised in that the longitudinal webs (24, 26) are angled towards the inside in such a manner that these longitudinal webs (24, 26) are adjacent to one another in the assembled state of the segments (18, 20).

2. Pipe sleeve according to claim 1, characterised in that the assembled segments (18, 20) can be secured together by means of at least one tightening strap (36).

3. Pipe sleeve according to claim 1 or claim 2, characterised in that an inwardly directed bend (28) is provided on the lower end face of the segments.

4. Pipe sleeve according to one of the preceding claims, characterised in that the segments (18, 20) are provided in the their upper region (32) with a rough outer surface (42).

5. Pipe sleeve according to one of the preceding claims, characterised in that the expanding material (30) is provided only in an end region (34) of the segments (18, 20).

## Revendications

1. Manchon (16) pour le cloisonnement de tuyaux (14) traversant des parois ou des plafonds (10), comprenant
- un manchon pouvant être assemblé à partir de plusieurs segments (18, 20), les segments (18, 20) possédant chacun des plats longitudinaux (24, 26) repliés,
- un matériau expansé (30) résistant à la chaleur, pouvant se dilater vers l'intérieur sous l'effet de la chaleur, et qui est présent sur la face intérieure du manchon en plusieurs parties,
***caractérisé en ce que***
- les plats longitudinaux (24, 26) sont repliés vers l'intérieur de telle manière qu'à l'état assemblé des segments (18, 20), ces plats longitudinaux (24, 26) s'appuient les uns sur les autres.

2. Manchon selon la Revendication 1, ***caractérisé en ce que*** les segments (18, 20) assemblés peuvent être fixés les uns aux autres par au moins un collier de serrage (36).

3. Manchon selon la Revendication 1 ou 2, ***caractérisé en ce*** qu'un rabat (28) tourné vers l'intérieur est présent sur la face frontale inférieure des segments.

4. Manchon selon l'une quelconque des Revendications précédentes, ***caractérisé en ce que*** les segments (18, 20) possèdent dans leur partie supérieure (32) une surface extérieure rugueuse (42).

5. Manchon selon l'une quelconque des Revendications précédentes, ***caractérisé en ce que*** le matériau expansé (30) n'est présent que dans une zone d'extrémité (34) des segments (18. 20).
